Europäisches Patentamt

European Patent Office

Office européen des brevets

(11) Publication number: **0 189 146**
**B1**

# EUROPEAN PATENT SPECIFICATION

(45) Date of publication of patent specification: **02.05.90**

(21) Application number: **86100607.0**

(22) Date of filing: **17.01.86**

(51) Int. Cl.⁵: **F 02 B 47/10, F 02 B 1/10, F 42 B 19/20**

(54) Piston type internal combustion engine power units.

(30) Priority: **25.01.85 GB 8502198**

(43) Date of publication of application:
**30.07.86 Bulletin 86/31**

(45) Publication of the grant of the patent:
**02.05.90 Bulletin 90/18**

(84) Designated Contracting States:
**AT BE DE FR GB IT NL SE**

(56) References cited:
**WO-A-84/03538**
**DE-C- 826 988**
**GB-A-1 327 951**
**GB-A-1 423 862**
**GB-A-1 517 799**
**GB-A-2 027 485**
**NL-C- 67 341**
**US-A-3 559 402**

(73) Proprietor: **COSWORTH DEEP SEA SYSTEMS LIMITED**
**St. James Mill Road**
**Northampton NN5 5JJ (GB)**

(72) Inventor: **Jubb, Albert**
**2 Thickthorn Close**
**Kenilworth Warwickshire, CV8 2AF (GB)**

(74) Representative: **Leach, John Nigel et al**
**FORRESTER & BOEHMERT Widenmayerstrasse 4/I**
**D-8000 München 22 (DE)**

Courier Press, Leamington Spa, England.

**Description**

This invention relates to piston type internal combustion engine power units for use in an enclosed environment where free atmospheric air is not available. Examples of such an environment include a submersible vessel, or any other mobile underwater installation or static underwater installation, or a sealed installation in, for example, a mine.

Hitherto the only piston type internal combustion engines which have been proposed for use in an enclosed environment have been compression ignition engines.

GB 1,327,951 discloses a diesel engine for use in an enclosed environment and explains that when such an engine is operated under recycle conditions, the recycled gaseous mixture contains larger quantities of carbon dioxide and steam than does atmospheric air and hence has a lower value of "gamma", the ratio of specific heat at constant pressure to that of constant volume. In consequence the compression temperatures and pressures in the engine are lower than in a normal air aspirated engine and the cycle work is reduced. It is explained that it is usual to run the engine at increased inlet pressure and temperature when running under recycle conditions, for example 20 p.s.i. absolute, but this leads to undesirable increase in the gas pressure in the enclosed environment and to oil leaks from the crank case. The problem is stated to be overcome by using a compressor to remove gas from the crank case and compress it to a pressure higher than that in the recycle line so that it may be returned to the engine. The increase in the amount of exhaust gas available for recirculation due to the production of carbon dioxide on combustion of the hydrocarbon fuel is dealt with by discharging an amount of the dewatered exhaust gas corresponding to the carbon dioxide produced on combustion. GB 1423862 discloses a similar diesel engine.

WO 84/03538 discloses a diesel engine in which the exhaust gas is treated with water to remove an amount of carbon dioxide which corresponds to that produced on combustion of the hydrocarbon fuel and in which the recycled gas contains a relatively high proportion of carbon dioxide to improve the efficiency of carbon dioxide removal. The consequent problem of a change in gamma is overcome by adding an additional component such as a monatomic inert gas to maintain gamma at a value such that the heat produced on compression is sufficient for efficient combustion of the fuel.

The present invention overcomes the problem arising from the increase in carbon dioxide in the recycled gas by providing a piston type internal combustion engine in an enclosed environment comprising a combustion chamber, delivery means to deliver inert carrier gas, combustion supporting gas and fuel into the combustion chamber, means to exhaust exhaust gas from the combustion chamber, a circuit through which the exhaust gas is ducted from the combustion chamber and some at least returned to the combustion chamber, gas in the circuit being at a first pressure which is independent of the pressure of the environment external to the enclosed environment and means to discharge to the external environment a portion of the exhaust gas which corresponds to the amount of carbon dioxide added to the exhaust gas by said combustion and the remainder of the exhaust gas returned to the combustion chamber to provide the carrier gas characterised by the provision of spark ignition means to cause the fuel to burn in the combustion chamber and a volumetric compression ratio lying in the range 12:1 to 25:1.

By providing spark ignition means to cause the fuel to burn in the combustion chamber, the problem of insufficient combustion temperature caused by the change in the value of gamma is overcome since the combustion of fuel is not dependent on the attaining of an ignition temperature as a result of compression within the combustion chamber.

Operating the internal combustion spark ignition engine at a compression ratio lying in the ranges mentioned above compensates for the loss of efficiency which would otherwise occur when the carbon dioxide level builds up in the recycled gas causing the mean ratio of specific heat of the working gas to fall which would lower efficiency.

The invention also provides a piston type internal combustion engine power unit for such use which minimises the weight of the power unit.

The internal combustion spark ignition engine may have a volumetric compression ratio lying in the range 15:1 to 25:1 and preferably in the range 15:1 to 20:1.

In one more specific aspect of the invention the exhaust gas may be treated to remove an amount of carbon dioxide therefrom generally equal to the amount of carbon dioxide added to the exhaust gas by said combustion and the thus treated exhaust gas is returned to the combustion chamber to provide the carrier gas.

Preferably means are provided to treat the exhaust gas with water to remove from the exhaust gas and absorb in the water the carbon dioxide.

The internal combustion spark ignition engine may be operated so that the working gas pressure is in excess of one atmosphere, for example from two atmospheres to above three atmospheres and preferably about four atmospheres.

This has the effect of increasing the possible partial pressure of the carbon dioxide in the exhaust gas so that when the exhaust gas is treated with water to remove $CO_2$ less water is needed to remove the $CO_2$ than would be the case if the engine were operated at, for example, one atmosphere. Consequently the size of the absorbing apparatus and ancilliary pumping equipment can be minimised thereby minimising the weight of the power unit.

The method may include the step of cooling the exhaust gas prior to treatment with water to remove the $CO_2$.

The internal combustion spark ignition engine may be operated with a fuel/combustion supporting gas mixture ratio which minimises or avoids any excess carbon monoxide or excess combustion supporting gas. As a result the carrier gas comprises carbon dioxide and nitrogen with perhaps a few percent only of oxygen or carbon monoxide and small fractions of partly burnt fuel and other minor constituents.

A sensor may be provided to sense the combustion supporting gas content of the exhaust gas returning to the engine and to provide a control signal to a feed control to control the supply of combustion supporting gas to the combustion chamber.

Because of the above described composition of the carrier gas, then so far as the solution of carbon dioxide is concerned the partial pressure in the exhaust gas must be of the order of over three atmospheres out of the four atmospheres total pressure, for example, the only major contamination being nitrogen which comes out of solution in the water, for example sea water and thus balance at about 0.8 atmospheres, i.e. its own partial pressure in the water.

In such a system the amount of water needed to remove carbon dioxide will be minimised to such a degree that the heat in the exhaust will produce a notable temperature rise in the treatment water, for example of the order of 10°C to 20°C, and so the solubility of a carbon dioxide will be seriously reduced. The step of cooling the exhaust gas prior to treatment with water to remove carbon dioxide avoids this problem.

The water for cooling may be at any desired pressure and so it can be supplied at ambient pressure including the case where the power unit is installed in a deeply submerged vessel.

Means may be provided to sense the pressure in the circuit and to provide a control signal to a means to adjust the amount of water with which the exhaust gas is treated to control the amount of carbon dioxide removed from the exhaust gas.

In a second more specific aspect of the invention, the portion of the exhaust gas which is not recycled to the combustion chamber is discharged from the power unit and from the enclosed environment.

We have recognised that the nitrogen of the first more specific aspect of the invention is present only because the carbon dioxide removal is by solution in water because the nitrogen enters the system by coming out of solution in the water.

By not treating the exhaust gas with water to remove $CO_2$ but instead discharging a portion of the exhaust gas generally equal to the quantity of carbon dioxide added by the combustion, the nitrogen initially in the carrier gas rapidly disappears, since there is little nitrogen in the usually provided combustion supporting gas, i.e. oxygen, and little, if any, in the fuel. Therefore, the exhaust gas will be substantially all carbon dioxide, except for minor amounts of carbon monoxide, oxygen aldehydes and the like, probably of the order of 2% to 4% by volume, and consequently have a lower value of gamma but there is no problem in achieving combustion of the fuel due to the use of the spark ignition means.

The portion of the exhaust gas which is discharged must be compressed to a pressure at least equal to that of the external environment. The swept volume of the pump necessary is less than 25% of that of a four stroke internal combustion spark ignition engine. Therefore, with an eight cylinder engine one single acting pump cylinder of the same dimensions as the cylinders of the internal combustion engine may be used.

Generally, a multistage compression, with intercooling system, is needed and so another smaller, piston, pump is also provided.

The power consumption of the pump necessary to discharge the relevant portion of the exhaust gas in a case where the engine is operating at an induced pressure of four atmospheres to an external environment in which the ambient pressure is one hundred atmospheres (corresponding to a pressure of about 1500 p.s.i. and a depth of over 3000 feet in water) by starting with a compression from four to twenty atmospheres, cooling and then compressing from twenty to one hundred atmospheres is approximately 8% to 10% of the engine output.

It is preferred that the internal combustion engine is supplied with a carrier gas which is substantially wholly carbon dioxide and with a stoichiometric or near stoichiometric mixture of fuel, e.g. petrol, and combustion supporting gas, e.g. oxygen.

A sensor may be provided to sense the combustion supporting gas content of the exhaust gas returning to the engine to provide a control signal to a feed control to control the supply of combustion supporting gas to the combustion chamber.

A sensor may be provided to measure the fractional partial pressure of combustion supporting gas and carbon monoxide in the exhaust returning to the engine and provide a signal to a fuel/gas mixture control of the engine.

Means may be provided to sense the pressure in the circuit to provide a control signal to a means to adjust the amount of exhaust gas which is discharged from the enclosed environment.

In such circumstances it is considered that the basic engine efficiency at full power will be about 30%, less 10% power for the pump out compressor, giving a total efficiency of 27% but the big virtue of this aspect of the invention is that the weight of the power unit is minimised notably by the absence of a water absorption system for carbon dioxide absorption. This aspect of the invention is, therefore, most useful in application for short period duties where fuel weights and costs are not dominant but weight per horsepower is.

Two embodiments of the invention will now be described, by way of example, with reference to the accompanying drawings wherein:

Figure 1 is a schematic illustration of a first embodiment of the invention; and

Figure 2 is a schematic illustration of a second embodiment of the invention.

The internal combustion engine power unit, which is the first embodiment of this invention, has been devised for operating in a closed environment where communication with free atmosphere is undesirable or impossible, for example under water, in which latter context the engine will hereinafter be described.

The engine comprises a desired number of reciprocatory piston/cylinder units 6 designed to operate on a spark ignition cycle using 100 octane petrol as fuel and hence each having a combustion chamber and an inlet valve or valves through which a mixture of gases containing oxygen are admitted to the cylinder and an exhaust valve or valves through which exhaust gas is ducted from the cylinder. In the present example the engine has eight such units only one of which is illustrated. If desired the engine may have any other suitable number of piston/cylinder units. The engine also comprises means 7 to inject fuel into the cylinder but may, if desired, be provided with a conventional carburettor. A circuit C is also provided through which the exhaust gas is ducted from the combustion chambers and a portion returned to the cylinder, the circuit including a cooling unit 10 to which water is delivered via conduits 8 from the exterior of a pressure wall of a gas tight enclosure 9a within which the power unit is disposed. The water is fed along conduits 8 at ambient pressure external to the pressure wall 9 by conventional pump means.

In operation of the engine in a non-atmospheric or closed cycle oxygen from a reservoir 26 is delivered to an inlet manifold of the engine at a desired operating pressure, in the present example four atmospheres, and is ducted into the engine cylinder thereby together with carrier gas at the above mentioned operating pressure of four atmospheres. Fuel is injected into the cylinder to provide a combustible mixture with the oxygen and carrier gas and the combustible mixture is compressed within the engine cylinder in conventional manner and is caused to ignite by a spark provided by a spark ignition means comprising a spark plug 5. The resultant exhaust gas is ducted from the combustion chamber through the cooling unit 10 to an absorber unit 16 in which the exhaust gases are treated with sea water at a pressure equal to the operating pressure of the engine, i.e. in the present example four atmospheres.

The absorber may be of any suitable type but preferably comprises a rotor provided with wire mesh or other material having a high surface area to volume ratio through which the water is thrown radially outwardly by centrifugal force whilst the exhaust gas is caused to pass therethrough in counterflow. This absorber achieves rapid absorption into the sea water and is compact. The absorber unit 16 is provided with a level control 17 to ensure that the absorber is not flooded or run below a predetermined water level.

The thus treated exhaust gas is then fed back into the manifold 20 where oxygen is added to the treated exhaust gas from the reservoir 26.

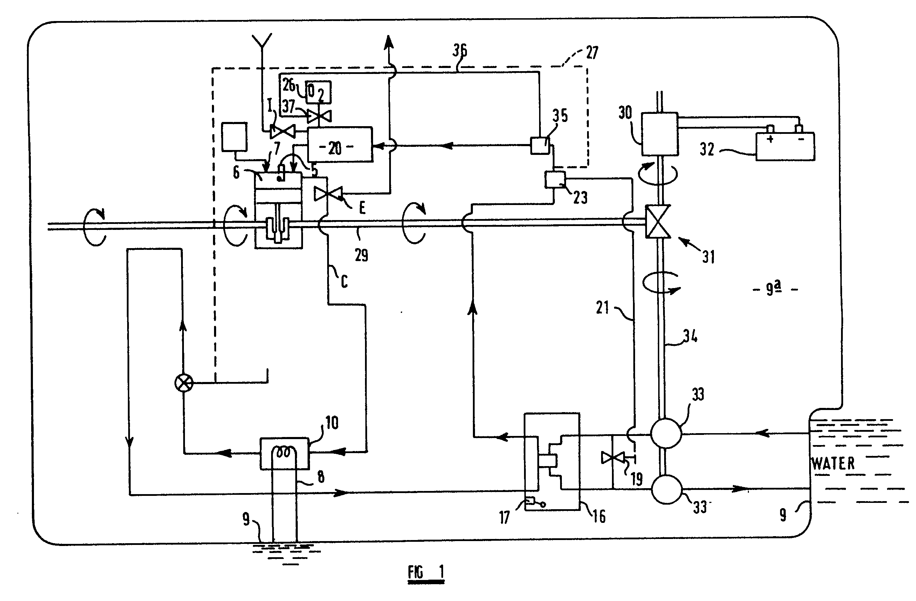

Air may be supplied for the initial charge for closed cycle operation by means of a supplementary supply bottle or air may be ducted from available free space in the engine compartment or from atmosphere. Of course once closed cycle operation is started, further air is not required but only a continual supply of oxygen. If the engine is shut down from a closed cycle system in balanced operation the already present charge is suitable for another start up without additions. Because the carrier gas is rich in carbon dioxide, it is possible, or may be desirable, to pass only a proportion of the cooled exhaust gas through the absorber and still have the correct mixture entering the engine, by absorbing a greater proportion of carbon dioxide from the smaller quantity of exhaust gas. Thus a duct 27 may be provided (shown in dotted lines in Figure 1) between a position adjacent to and downstream of the cooler 10 and the circuit C downstream of the absorber 16.

The engine 6 has a drive shaft 29 which drives a generator 30 through a gearbox 31, conveniently through a releasable coupling (not shown). Power may be derived from the engine either directly by a power take off (not shown) or in the form of electricity from the generator. Conveniently the generator 30 is connected to a battery 32 and may be operated as a starter motor. Pumps 33 for the absorber unit 16 are also driven from the engine drive shaft 29 via the gearbox 31 and shaft 34.

In order to control the amount of water circulated through the absorber 16 by the pump 33, a motorised bypass valve 19 is provided which is adjusted in accordance with the signal provided along the line 21 from a sensor 23 through which the treated exhaust gas is passed after leaving the absorber 16. The sensor 23 measures the total pressure in the gas circuit C and increases the water flow through the absorber 16 if the pressure exceeds a predetermined pressure and reduces the water flow if the pressure falls below a predetermined pressure so as to control the amount of carbon dioxide removed from the exhaust gas.

The gas approaching the manifold 20 to enter the cylinder 6 passes through a sensor unit 35 positioned to sense the oxygen content of the exhaust gas and to provide a control signal via line 36 to an oxygen feed control 37 ensure that a (variable) amount of oxygen is added to the carrier gas so that the proportion of oxygen in the exhaust is maintained substantially constant at the desired stoichiometric level to avoid excess oxygen or excess carbon monoxide in the exhaust gas.

Since the substantial majority of the combustible mixture compressed in the combustion chamber is carbon dioxide (plus, for example, one fifth of oxygen) then the mean ratio of specific heats of this gas mixture would be lower than that in a conventional air-breathing spark ignition engine. Therefore, the temperature rise on compression would be lower, and the efficiency of the working cycle reduced. To compensate as far as practical for this, the volumetric compression ratio is increased from a conventional figure for air-breathing of about 8 to 11, to up to 25. For example, a compression ratio of 25 is suitable for slow speed, small cylinders, where heat losses can be large, and, due to the low ratio of specific heats of the gas, the octane value of the fuel does not have to be increased to prevent detonation.

In practical terms, volumetric compression ratios to suit existing fuels are about 20 for 100 octane fuel and 15 for 75 octane fuel, but these precise values will depend on the engine cylinder size and the speed of operation, plus valve turning effects and the like.

The efficiency of the engine, with appropriately adjusted compression ratio, can be expected to be only marginally lower than that of an air-breathing unit, suitably adjusted for the same fuel, in compression ratios, spark setting and the like.

Thus, in the present example the engine 6 is arranged to operate at a compression ratio of 20:1 although the engine may be operated at any other compression ratio within the range 12:1 to 25:1 and preferably approximately 15:1 to 25:1 and still more preferably in the range 15:1 to 20:1 or any other compression ratio lying within the constraints imposed at the upper limit by mechanical strength of the engine and detonation problems of fuel, and at the lower limit by the need to provide adequate efficiency since, for the reasons set out above, i.e. as the carbon dioxide level builds up in the carrier gas, the mean ratio of specific heat of the working gas falls giving lower temperature rises during the compression stroke and hence lower efficiency. This effect is compensated for by operating the engine at relatively high volumetric compression ratio falling within the range mentioned above. As a result it is not necessary to add inert gas such as Argon as would be the case if the engine were a diesel engine where reduction of temperature rise will make the engine misfire completely.

It will be appreciated that an engine embodying the present invention not only minimises the weight of the piston and cylinder unit for a given output, by avoiding the extra weight a diesel engine would involve, but also minimises the weight of engine accessories together with the fuel and combustion supporting gas, e.g. oxygen, supplies for a given output.

By operating the engine at an induction pressure of four atmospheres, although the induction pressure may be atmospheric but preferably is above atmospheric pressure, the partial pressure of carbon dioxide in the exhaust gas is increased so that the absorber 16 requires less water than would otherwise be the case to absorb the necessary amount of carbon dioxide so that the size of the absorber 16 and the capacity of the pump 33 is correspondingly reduced compared with what would otherwise be the case.

It is preferred that the engine operates initially on an atmospheric cycle drawing charge from atmosphere which is drawn into the combustion chamber at atmospheric pressure, then, when it is desired to initiate closed cycle operation, an exhaust valve E is operated to direct exhaust gas to the absorber 16 and to close the exhaust to atmosphere then an inlet valve I is operated to close the inlet to atmosphere. The pressure in the system increases due to carbon dioxide generation until the pressure attains the desired operating pressure, in the present example four atmospheres, at which the partial pressure of the carbon dioxide in the exhaust gas is such that the carbon dioxide is absorbed at the same rate as it is generated, thereby preventing further pressure increase. The rate of pressure increase in the closed circuit depends upon the carbon to oxygen ratio and so will be high when the engine is operating at high level and vice versa.

When it is desired to terminate closed cycle operation, the exhaust valve E is open to atmosphere thus dropping the pressure in the circuit C to atmospheric pressure and then the valve I is opened.

Problems with oxygen loss are avoided by controlling the oxygen content to approximately that of the stoichiometric ratio of fuel and oxygen so that there is little or no excess oxygen in the exhaust gas or, for that matter, excess carbon monoxide so that loss of these constituents due to absorption is avoided. This is to be contrasted with the situation obtaining with a diesel engine where the exhaust necessarily contains a high excess of oxygen which would lead to excessive oxygen loss unless special steps are taken.

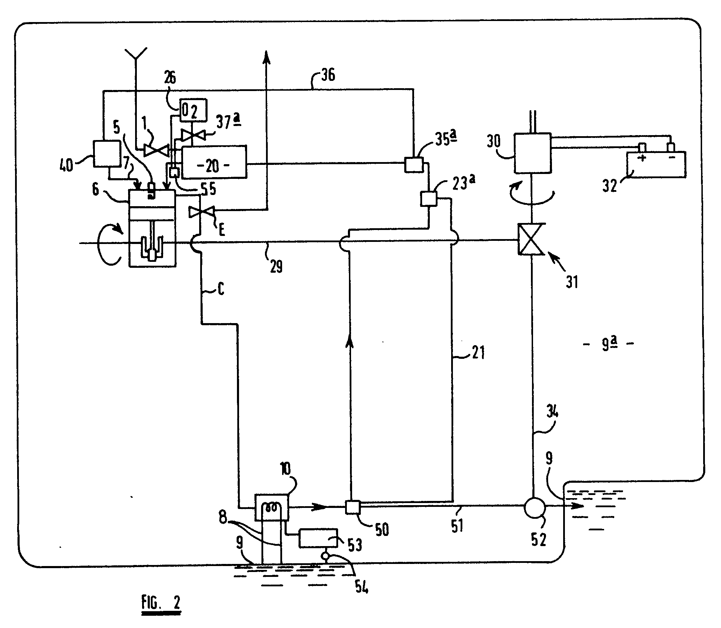

Referring now to Figure 2 where a second embodiment of the invention is illustrated which again comprises a spark ignition internal combustion engine power unit for operating both under conditions of normal aspiration at atmospheric pressure and in an environment where communication with free atmosphere is undesirable or impossible, such as underwater, in which latter context the engine is hereinafter described.

In this embodiment the engine and certain other parts of the power unit are as described in connection with the first embodiment and the same reference numerals have been used to refer to corresponding parts.

In this embodiment the weight of the power unit is still further reduced compared with that of the first embodiment, in that, instead of merely being able to minimise the size of the absorber 16 and associated pumps 33, the absorber 16 has been omitted entirely and instead the exhaust gas is circulated by the circuit C to a valve 50 which is controlled by a sensor 23a which is sensitive to the pressure in the circuit C and which operates to maintain the pressure in the circuit C below a predetermined pressure by discharging a proportion of the exhaust gas via conduit 51 and pump 52 to the environment externally of the power unit and in particular in this embodiment to the sea externally of the pressure wall 9 of the gas tight enclosure 9a. The pump 52 is driven by shaft 34 via gearbox 31 from the engine drive shaft 29. Prior to passage to the valve 50, the exhaust gas passes through a cooler 10 to which water at ambient pressure is fed via conduits 8 and so the heat is removed to the water through pressure walls of the cooler 10. Combustion generated water in the exhaust gas is condensed out and is fed to a collecting vessel 53 from which it is pumped out by a mechanical system of any convenient form and at convenient intervals as indicated diagrammatically at 54. The exhaust is cooled to some 5°C to 10°C above the temperature of the ambient water.

The valve 50 feeds the surplus exhaust gas to the pump 52 which is a multi-stage pump out compressor.

The non-surplus gas is fed via the sensor 23a to a sensor 35a which measures the fractional partial pressures of oxygen and carbon monoxide in the cooled exhaust, sums the two readings and controls the fuel/gas mixture control 40 of the fuel injection system 7 of the engine 6 so that the resultant of carbon monoxide and oxygen in the cooled exhaust is held to a minimum.

Let X be the volume fraction of free oxygen in the exhaust of the engine and Y be the volume fraction of carbon monoxide in the exhaust of the engine.

Then if the mixture is over-rich a relatively large amount of CO occurs (high Y) and very little oxygen loss occurs (low X) and so a relatively large amount of extra fuel is used.

If the mixture is over-weak, a relatively large amount of oxygen occurs in the exhaust (high X) (which gets pumped out with the other gases) and little CO (low Y) in the exhaust. Hence less fuel is used but more oxygen.

The aim is a compromise, and since oxygen storage is usually heavy compared with fuel, an approximate best balance is with Y=about three times X.

The control thus adjusts the fuel/oxygen ratio to give the minimum nett loss of 3X+Y. Change of the fuel/oxygen ratio then increases one and decreases the other of these terms and the control adjusts until the nett loss is a minimum.

The actual values of X and Y depend on the engine and how it is loaded. In a situation where emergency power is needed, fuel consumption and oxygen consumption is sacrificed.

In a situation where it is desired to make fuel and oxygen last as long as possible, the above "economy setting" of 3X+Y is used.

Suitable control means such as a microprocessor may be provided to adjust X and Y as necessary.

The returned cooled exhaust gas has oxygen added thereto from the reservoir 26 to bring the oxygen content to 21% by volume. This is achieved by injecting gaseous oxygen and mixing in a turbulent chamber with the sampling of the oxygen content by a sensor 55 at the exit from the manifold 20, for example by means of a zirconia cell and providing a signal from the cell to be balanced against a reference and variation from a reference cell to operate the oxygen feed control 37a in a closed loop.

The resultant mixture of 21% oxygen and 79% carbon dioxide passes to the engine cylinder intakes through a set of throttle controls ganged together so that the throttles control the volume flow through the engine. Fuel is added by injector system 7 where the fuel flow is adjusted from its "nominal setting" to give more or less fuel flow following the signals of carbon monoxide and oxygen in the cooled exhaust provided by the sensor 35a as well as by signals of absolute gas pressure, throttle position etc. provided in conventional manner. Ignition of the compressed mixture in the compression chamber is by a conventional spark plug and the ignition timing is adjusted by any suitable means of known type.

Thus, the gas flow is mainly in a closed cycle where it enters the engine at the intake, has oxygen and fuel added which burn in the engine giving shaft power and heat, the latter being removed by heat transfer from the exhausts by the cooler, and the excess carbon dioxide, water and combustion products being removed by pumping to the exterior of the enclosed environment to maintain steady conditions whilst the residual gas is returned to the engine intake.

If the pump 52 is not pumping enough volume of gas out then the pressure level will rise which will be sensed by the sensor 23 so that the valve 50 is adjusted to control the amount of gas which is discharged.

It should be noted that it is not essential that the gas pressure level in the cycle should be constant for all duties, nor is it essential that the oxygen percentage should be held at 21% for all conditions. These figures can be altered to differing requirements and it should be noted that their influence on, for example, flow and velocities, ignition delays, and association etc. are considered and appropriate adjustments made, for example to ignition timing, to give the best results.

A major requirement in this embodiment is to keep the fuel/oxygen ratio to that which minimises pump out gas losses and hence minimises oxygen use. This is contrasted with the situation obtaining with a diesel engine where the exhaust necessarily contains a high excess of oxygen which would lead to excessive oxygen loss when the portion of the exhaust gas is pumped out, thus preventing, in terms of practically acceptable oxygen consumption, the use of a diesel engine where the excess exhaust gas is discharged from the power unit and the enclosed environment.

By controlling the fuel/oxygen ratio so that the mixture is not "rich" carbon monoxide in the exhaust gas is avoided which also contributes to efficiency since if it were present a proportion would be discharged with the discharged part of the exhaust gas rather than being recycled where it would serve as a part of the fuel.

The invention may be applied to any piston type of spark ignition internal combustion engine including rotary piston types.

## Claims

1. A piston type internal combustion engine (6) in an enclosed environment (9a) comprising a combustion chamber, delivery means (20, 26, 7), to deliver inert carrier gas, combustion supporting gas and fuel into the combustion chamber, means to exhaust exhaust gas from the combustion chamber, a circuit (C) through which the exhaust gas is ducted from the combustion chamber and some at least returned to the combustion chamber, gas in the circuit (C) being at a first pressure which is independent of the pressure of the environment external to the enclosed environment (9a) and means (16; 52) to discharge to the external environment a portion of the exhaust gas which corresponds to the amount of carbon dioxide added to the exhaust gas by said combustion and the remainder of the exhaust gas returned to the combustion chamber to provide the carrier gas characterised by the provision of spark ignition means (5) to cause the fuel to burn in the combustion chamber and a volumetric compression ratio lying in the range 12:1 to 25:1.

2. An engine according to claim 1 wherein the engine (6) has a volumetric compression ratio lying in the range 15:1 to 20:1.

3. An engine according to claim 1 or claim 2 wherein means (16) are provided to treat the exhaust gas to remove an amount of carbon dioxide therefrom generally equal to the amount of carbon dioxide added to the exhaust gas by said combustion and to return the thus treated exhaust gas to the combustion chamber to provide the carrier gas.

4. An engine according to claim 3 wherein means (16) are provided to treat the exhaust gas with water to remove from the exhaust gas and absorb in the water the carbon dioxide.

5. An engine according to claim 4 wherein means (10) are provided to cool the exhaust gas prior to treatment with water to remove the $CO_2$.

6. An engine according to any one of claims 4 to 5 wherein said engine comprises a sensor (35) to sense the combustion supporting gas content of the exhaust gas returning to the engine (6) and to provide a control signal to a feed control (37) to control supply of combustion supporting gas to the combustion chamber.

7. An engine according to any one of claims 4 to 6 wherein means (23) are provided to sense the pressure in the circuit (C) and to provide a control signal to a means (19) to adjust the amount of water with which the exhaust gas is treated to control the amount of carbon dioxide removed from the exhaust gas.

8. An engine according to claim 1 or claim 2 wherein means (52) are provided whereby the portion of the exhaust gas which is not recycled to the combustion chamber is discharged from the enclosed environment.

9. An engine according to claim 8 wherein means (52) are provided to compress the portion of the exhaust gas qhich is discharged to a pressure at least equal to that of the external environment.

10. An engine according to claim 8 or claim 9 wherein a sensor (55) is provided to sense the combustion supporting gas content of the exhaust gas returning to the engine to provide a control signal to a feed control (37a) to control supply of combustion supporting gas to the combustion chamber.

11. An engine according to any one of claims 8 to 10 wherein a sensor (35a) is provided to measure the fractional partial pressure of combustion supporting gas and carbon monoxide in the exhaust returning to the engine and provide a signal to a fuel/gas mixture control (40) of the engine.

12. An engine according to any one of claims 8 to 11 wherein means (23a) are provided to sense the pressure in the circuit (C) and to provide a control signal to a means (50) to adjust the amount of exhaust gas which is discharged from the enclosed environment (9a).

## Patentansprüche

1. Maschine mit innerer Verbrennung vom Kolbentyp (6) in einem geschlossenen Raum (9a) mit einer Verbrennungskammer, Mitteln (20, 26, 27) zum Zuführen eines inerten Trägergases, eines Verbrennungsstützgases und eines Brennstoffs in die Verbrennungskammer, Mitteln zum Abführen der Abgase aus der Verbrennungskammer, einem Kreislauf (C), durch den die Abgase aus der Verbrennungskammer abgeführt und wenigstens zum Teil in die Verbrennungskammer zurückgeführt werden, wobei das Gas in dem Kreislauf (C) uner einem ersten Druck steht, der von dem Druck des Raumes außerhalb des geschlossenen Raumes (a) unabhängig ist und Mitteln (16; 52) zum Abgeben eines Teiles der Abgase, der der Menge des durch die Verbrennung dem Abgas zugeführten Kohlendioxyd entspricht, in den Außenraum, und Rückführen des Restes der Abgase in die Verbrennungskammer, um das Trägergas zu bilden, gekennzeichnet durch die Vorsehung von Mitteln zum Erzeugen eines Zündfunkens (5) zur Verursachung des Verbrennens des Brennstoffs in der Brennkammer und einer volumetrischen Verdichtung im Bereich von 12:1 zu 25:1.

2. Maschine nach Anspruch 1, wobei die Maschine (6) eine volumetrische Verdichtung im Bereich von 15:1 zu 20:1 hat.

3. Maschine nach Anspruch 1 oder Anspruch 2, wobei Mittel (16) vorgesehen sind, um die Abgase zur Entfernung eines Teiles des Kohlestoffdioxyds aus diesem, der im wesentlichen den Betrag des dem Verbrennungsgas durch die Verbrennung zugeführten Kohlendioxyds entspricht, zu behandeln, und um die so behandelten Abgase in die Verbrennungskammer zur Bildung Trägergases zurückzuführen.

4. Maschine in Anspruch 3, wobei Mittel (16) vorgesehen sind, um das Abgas mit Wasser zur Entfernung des Kohlenstoffdioxyds aus dem Abgas und dessen Absorbtion in dem Wasser zu behandeln.

5. Maschine in Anspruch 4, wobei Mittel (10) vorgesehen sind, um die Abgase vor der Behandlung mit Wasser zur Entfernung des $CO_2$ zu behandeln.

6. Maschine nach einem der Ansprüche 4 bis 5, wobei die Maschine einen Sensor (35) zum Messen des Anteils an dem die Verbrennung stützenden Gas in dem zu der Maschine (6) zurückkehrenden Abgas und zur Schaffung eines Steuersignals auf eine Speisesteuerung (37) zur Steuerung der Zufuhr von der Verbrennung stützendem Gas zu der Verbrennungskammer.

7. Maschine nach einem der Ansprüche 4—6, wobei Mittel (23) zum Messen des Drucks in dem Kreislauf (C) und zur Lieferung eines Steuersignals zu den Mitteln (19) zur Einstellung der Wassermenge, mit der das Abgas zur Steuerung des Betrages des von den Abgasen entfernten Kohlestoffdioxyds behandelt wird, vorgesehen sind.

8. Maschine nach einem der Ansprüche 1 oder 2, wobei Mittel (52) vorgesehen sind, durch die der Anteil der Abgase, die nicht zu der Verbrennungskammer zurückgeführt werden, aus dem geschlossenen Raum abgeführt werden.

9. Maschine nach Anspruch 8, wobei Mittel (52) vorgesehen sind, um den Teil des Abgases, der abgegeben wird auf einen Druck komprimiert wird, der wenigstens demjenigen des äußeren Raumes entspricht.

10. Maschine nach Anspruch 8 oder Anspruch 9, wobei ein Sensor (55) vorgesehen ist, um den Gehalt an die Verbrennung stützendem Gas in dem zu der Maschine zurückgeführten Abgas zum Liefern eines Steuersignals zu einer Zufuhrsteuerung (37a) zu messen, um die Zufuhr des die Verbrennung stützenden Gases zu der Verbrennungskammer zu steuern.

11. Maschine nach einem der Ansprüche 8—10, wobei ein Sensor (35a) vorgesehen ist, um den geringen Partialdruck des Verbrennungsstützgases und des Kohlenstoffmonoxyds in dem zu der Maschine zurückgeführten Abgas zu messen und ein Signal für eine Steuerung (40) der Brennstoff/Gas/Mischung zu der Maschine zu schaffen.

12. Maschine nach einem der Ansprüche 8 bis 11, wobei Mittel (23a) vorgesehen sind, um den Druck in dem Kreislauf (C) zu messen und ein Steuersignal zu einem Mittel (50) zu liefern, um den Betrag des Abgases einzustellen, das aus dem abgeschlossenen Raum (a) abzuführen.

## Revendications

1. Moteur à combustion interne à pistons (6) pour environnement clos (9a) comportant une chambre de combustion, des moyens (20, 26, 7) de distribution pour distribuer du gaz porteur inerte, du gaz d'entretien de combustion et du carburant dans la chambre de combustion, des moyens pour l'échappement des gaz d'échappement depuis la chambre de combustion, un circuit (C) par lequel le gaz d'échappement est conduit hors de la chambre de combustion et y est renvoyé au moins en partie, le gaz qui circule dans le circuit (C) étant à une première pression indépendante de la pression du milieu extérieur à l'environnement clos (9a), et des moyens (16, 52) pour refouler vers le milieu extérieur une partie du gaz d'échappement correspondant à la quantité de dioxyde de carbone ajoutée au gaz d'échappement par ladite combustion, le restant du gaz d'échappement étant renvoyé vers la chambre de combustion afin de constituer le gaz porteur, caractérisé en ce qu'il comprend des moyens d'allumage par étincelles (5) pour faire brûler le carburant dans la chambre de combustion et en ce qu'il a un rapport de compression volumétrique situé entre 12/1 et 25/1.

2. Moteur conforme à la revendication 1 dans lequel le moteur (6) a un rapport de compression volumétrique compris entre 15/1 et 20/1.

3. Moteur conforme à la revendication 1 ou à la revendication 2 comprenant des moyens (16) pour traiter le gaz d'échappement afin d'en extraire une quantité de dioxyde de carbone sensiblement égale à la quantité de dioxyde de carbone ajoutée au gaz d'échappement par ladite combustion et pour renvoyer le gaz d'échappement ainsi traité à la chambre de combustion pour fournir le gaz porteur.

4. Moteur conforme à la revendication 3 comprenant des moyens (16) pour traiter le gaz d'échappement à l'eau pour en extraire le dioxyde de carbone et l'absorber dans l'eau.

5. Moteur conforme à la revendication 4 comprenant des moyens (10) pour refroidir le gaz d'échappement avant son traitement par l'eau pour en extraire le $CO_2$.

6. Moteur conforme à l'une des revendications 4 et 5 comprenant un détecteur (35) pour mesurer le contenu en gaz d'entretien de combustion du gaz d'échappement renvoyé au moteur (6) et émettre un signal de commande destiné à un pilotage d'alimentation (37) pour piloter l'alimentation de la chambre de combustion en gaz d'entretien de combustion.

7. Moteur conforme à l'une des revendications 4 ou 6 comprenant des moyens (23) pour mesurer la pression dans le circuit (C) et émettre un signal de commande destiné à un dispositif (19) permettant d'ajuster la quantité d'eau avec laquelle le gaz d'échappement est traité pour régler la quantité de dioxyde de carbone extrait du gaz d'échappement.

8. Moteur conforme à la revendication 1 ou à la revendication 2 comprenant des moyens (52) grâce auxquels la partie du gaz d'échappement qui n'est pas recyclée vers la chambre de combustion est expulsée de l'environnement clos.

9. Moteur conforme à la revendication 8 comprenant des moyens (52) pour comprimer la partie du gaz d'échappement qui est expulsée à une pression au moins égale à celle du milieu extérieur.

10. Moteur conforme à la revendication 8 ou à la revendication 9 comprenant un détecteur (55) pour mesurer le contenu en gaz d'entretien de combustion du gaz d'échappement renvoyé au moteur pour émettre un signal de commande destiné à un pilotage d'alimentation (37a) pour piloter l'alimentation de la chambre de combustion en gaz d'entretien de combustion.

11. Moteur conforme à l'une des revendications 8 à 10 comprenant un détecteur (35a) pour mesurer la pression partielle en pourcentage du gaz d'entretien de combustion et du monoxyde de carbone dans le gaz d'échappement renvoyé au moteur et émettre un signal à un pilotage de mélange carburant/gaz (40) du moteur.

12. Moteur conforme à l'une des revendications 8 à 11 comprenant des moyens (23a) pour mesurer la pression dans le circuit (C) et émettre un signal de commande destiné à des moyens (50) pour régler la quantité de gaz d'échappement qui est expulsée de l'environnement clos (9a).

FIG. 1

FIG. 2